# EUROPÄISCHE PATENTSCHRIFT

(11) **EP 4 411 427 B1**
(45) Veröffentlichungstag und Bekanntmachung des Hinweises auf die Patenterteilung: **20.08.2025**
(21) Anmeldenummer: 23154591.4
(22) Anmeldetag: 02.02.2023
(51) Int. Cl.: G01V 8/20, F16P 3/14, G08B 13/183

(54) **LICHTVORHANG**
LIGHT CURTAIN
RIDEAU LUMINEUX

(43) Veröffentlichungstag der Anmeldung: 07.08.2024
(73) Patentinhaber: Leuze electronic GmbH + Co. KG, 73277 Owen/Teck (DE)
(72) Erfinder: Heckmayr, Alexander, 86807 Buchloe (DE); Olbrich, Sebastian, 80992 München (DE); Feller, Bernhard, 86316 Friedberg (DE)
(74) Vertreter: Ruckh, Rainer Gerhard

(56) Entgegenhaltungen:
- EP-A1- 3 770 646
- EP-A2- 2 444 825
- US-A1- 2015 316 410

## Beschreibung

Die Erfindung betrifft einen Lichtvorhang.

Ein derartiger Lichtvorhang ist beispielsweise aus der DE 10 2008 050 943 A1 vorbekannt. Der Lichtvorhang dient zur Überwachung von Objekten in einem Überwachungsbereich. Insbesondere ist der Lichtvorhang als Sicherheits-Lichtvorhang ausgebildet, der im Bereich der Sicherheitstechnik zur Überwachung von Gefahrenbereichen eingesetzt wird. Der Lichtvorhang umfasst eine Anordnung von Sendern die im Gehäuse einer Sendereinheit untergebracht sind. Weiterhin ist eine Anordnung von Empfängern vorgesehen, die in einem Gehäuse einer Empfängereinheit untergebracht sind. Die Sender- und Empfängereinheiten sind an gegenüberliegenden Rändern des Überwachungsbereichs angeordnet. Bei freiem Überwachungsbereich sind die von einem Sender emittierten Lichtstrahlen auf einen zugeordneten Empfänger geführt. Der Sender und der zugeordnete Empfänger bilden eine Strahlachse. Zur Objektdetektion werden in der Auswerteeinheit die Empfangssignale der Empfänger ausgewertet und in Abhängigkeit hiervon als Objektfeststellungssignal ein binäres Schaltsignal generiert, dessen Schaltzustände angeben, ob sich ein Objekt im Überwachungsbereich befindet oder nicht. Ein Objekteingriff liegt vor, wenn wenigstens eine Strahlachse durch ein Objekt unterbrochen ist.

Der Betrieb des Lichtvorhangs erfolgt derart, dass die Strahlachsen, d.h. die Sender und Empfänger der einzelnen Strahlachsen, zyklisch einzeln nacheinander aktiviert werden. Bei dem in der DE 10 2008 050 943 A1 beschriebenen Lichtvorhang werden die einzelnen Sender über Schieberegister einzeln aktiviert. Ebenso werden die Empfänger über Schieberegister einzeln aktiviert. Die Synchronisierung der Sender- und Empfängeraktivierung erfolgt auf optischem Weg. Hierzu werden die Lichtstrahlen einer ausgewählten Strahlachse verwendet.

Zur Erhöhung der Nachweisempfindlichkeit des Lichtvorhangs werden die Empfangssignale in Verstärkern verstärkt, bevor sie der Auswerteeinheit zugeführt werden.

Fehlfunktionen der Verstärker können zu Fehldetektionen bei der Objekterfassung führen.

Der Erfindung liegt die Aufgabe zugrunde, einen Lichtvorhang der eingangs genannten Art bereitzustellen, mit welchem eine sichere Objektdetektion durchführbar ist.

Die US 2015/0316410 A1 betrifft einen Lichtvorhang mit einer Reihenanordnung von Lichtstrahlen emittierenden Sendern und einer Reihenanordnung von Lichtstrahlen empfangenden Empfängern, wobei die Sender und die Empfänger von einem Controller angesteuert werden. Mit dem Lichtvorhang wird ein Türbereich überwacht. Bei Registrieren eines eindringenden Objekts löst der Lichtvorhang eine Alarmmeldung aus. Bei diesem Lichtvorhang wird ein Test derart durchgeführt, ob ein Empfänger Lichtstrahlen von einem zugeordneten Empfänger empfängt. Zudem wird dabei geprüft, ob hierbei eine hinreichende Signalreserve vorhanden ist.

Die EP 2 444 825 A2 betrifft einen Lichtvorhang, welcher zur Detektion in einem Überwachungsbereich dient und eine Anordnung von Strahlachsen bildenden Sendern und Empfängern aufweist. Die Sender und Empfänger der Strahlachsen sind einzeln oder zu mehreren nacheinander aktivierbar. Die Lichtstrahlen des Senders einer Strahlachse sind bei freiem Überwachungsbereich auf den Empfänger dieser Strahlachse geführt. Mit einer Auswerteeinheit wird in Abhängigkeit der Empfangssignale an den Ausgängen der Empfänger ein Objektfeststellungssignal generiert. Die Sender bilden wenigstens eine Senderkaskade. Die Sender sind mittels einer ersten Ansteuerschaltung ohne strombegrenzenden Widerstand in deren Strompfad direkt einzeln oder zu mehreren aktivierbar. Der Sendestrom wird zentral vorgegeben und ist für die einzelnen Sender individuell anpassbar. Die Empfänger bilden wenigstens eine Empfängerkaskade. Die Empfänger sind mittels einer zweiten einzeln oder zu mehreren aktivierbar. Die Empfangssignale werden ohne einzelne Vorverstärkung, Analogschalter und/oder Impedanzwandler pro Empfänger einem gemeinsamen Gruppenverstärker zugeführt.

Die EP 3 770 646 A1 Die Erfindung betrifft einen Lichtvorhang mit einer Sendereinheit, welche eine Reihenanordnung von Lichtstrahlen emittierenden Sendern aufweist, mit einer Empfängereinheit, welche eine Reihenanordnung von Lichtstrahlen empfangenden Empfängern aufweist und mit einer Auswerteeinheit, in welcher in Abhängigkeit von Empfangssignalen der Empfänger ein Objektfeststellungssignal generiert wird. Den Empfängern ist eine Anordnung mit Verstärkern zugeordnet, dass den einzelnen Empfängern Ansteuerelemente zugeordnet sind, die von Steuermitteln gesteuert sind. Der oder die Verstärker beziehen ihre Spannungsversorgung aus einem Potential P1 und ihren Massebezug aus einem Potential P2. Die Ansteuerelemente beziehen ihre Spannungsversorgung aus einem Potential P3 und ihren Massebezug aus einem Potential P4. Das Potential P1 ist höher als das Potential P3. Das Potential 3 ist höher als das Potential 2. Das Potential P2 ist höher als das Potential P 4.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich, mit einer Anordnung von Lichtstrahlen emittierenden Sendern, mit einer Anordnung von Lichtstrahlen empfangenden Empfängern, und mit einer Anordnung von Verstärkern, in welchen Empfangssignale der Empfänger verstärkt werden. In einer Auswerteeinheit wird in Abhängigkeit der verstärkten Empfangssignale ein Objektfeststellungssignal in Form eines binären Schaltsignals generiert, dessen Schaltzustände angeben, ob ein Objekt im Überwachungsbereich vorhanden ist oder nicht. Eine Testeinrichtung ist vorhanden, mittels derer Verstärkungseigenschaften der Verstärker getestet werden.

Die Erfindung betrifft weiterhin ein entsprechendes Verfahren.

Der erfindungsgemäße Lichtvorhang weist eine Anordnung von Sendern auf, die vorteilhaft in einer Sendereinheit integriert sind. Weiterhin weist der Lichtvorhang vorteilhaft eine Empfängereinheit auf, in der eine Anordnung von Empfängern angeordnet sind. Die Sendereinheit und die Empfängereinheit sind an gegenüberliegenden Rändern des Überwachungsbereichs angeordnet. Jedem Sender ist vorteilhaft ein Empfänger zur Ausbildung einer Strahlachse so zugeordnet, dass bei freiem Überwachungsbereich die Lichtstrahlen eines Senders ungehindert zu dem zugeordneten Empfänger der jeweiligen Strahlachse geführt sind. Objekte im Überwachungsbereich werden dadurch erkannt, dass zumindest die Lichtstrahlen einer Strahlachse unterbrochen werden.

Prinzipiell kann der Lichtvorhang auch als Reflexions-Lichtvorhang ausgebildet sein. Dann sind die Sender und Empfänger in einer gemeinsamen Sender-/Empfängereinheit untergebracht, die an einem Rand des Überwachungsbereichs angeordnet ist. Am anderen Rand des Überwachungsbereichs befindet sich ein Reflektor als weiterer Bestandteil des Lichtvorhangs. Bei freiem Überwachungsbereich werden die Lichtstrahlen jedes Senders zum Reflektor geführt und von dort zurück zum zugeordneten Empfänger reflektiert.

Erfindungsgemäß weist der Lichtvorhang eine Testeinrichtung auf, mittels derer dessen Verstärker getestet werden, wodurch Fehlfunktionen der Verstärker aufgedeckt werden können.

Vorteilhaft wird in der Testeinrichtung bei Aufdeckung eines Fehlers eines Verstärkers eine Fehlermeldung generiert oder der Lichtvorhang wird stillgesetzt.

Dadurch können Fehldetektionen bei der Objekterfassung bedingt durch Fehlfunktionen sicher vermieden werden.

Erfindungsgemäß ist eine Adressiereinheit vorhanden, mittels derer eine Adressierung der Empfänger und Verstärker durchgeführt wird und mit der Adressiereinheit Testvorgänge ausgelöst werden.

Die Adressiereinheit kann somit gezielt definierte Testvorgänge zur Testung von Verstärkern auslösen. Die Auslösung der Testvorgänge kann durch die Adressiereinheit frei vorgegeben werden und erfolgt dadurch ereignisgesteuert. Gemäß einer konstruktiv vorteilhaften Ausgestaltung weist die Adressiereinheit eine Schiebekette auf.

Besonders vorteilhaft werden mit der Adressiereinheit Testvorgänge dadurch ausgelöst, dass Testsignale an die Verstärker ausgegeben werden.

Mit der Adressiereinheit wird ein jeweiliger Verstärker adressiert und diesem Testsignale zugeführt. Die Testsignale werden dann zur Testung des Verstärkers verwendet.

Vorteilhaft weist die Adressiereinheit mindestens eine gesonderte Adresse zur Auflösung von Testvorgängen auf.

Mit der wenigstens einen gesonderten Adresse wird für einen spezifischen Verstärker ein Testvorgang ausgelöst, so dass dieser, insbesondere mit unter der gesonderten Adresse gesandten Testsignalen, getestet wird.

Besonders vorteilhaft ist der Adressiereinheit eine Steuerung zugeordnet, in welcher Testvorgänge überprüft werden. Insbesondere kann die Adressiereinheit in der Steuerung integriert sein.

Bei dieser Konfiguration werden Testsignale von den Verstärkern in die Steuerung rückgelesen und dort mit vorgegebenen Erwartungshaltungen verglichen.

Insbesondere sind die Erwartungshaltungen von Sollwerten gebildet.

Generell wird durch Rücklesen der Testsignale von einem Verstärker die Reaktion dieses Verstärkers auf die Testsignale erfasst, wobei anhand dieser Reaktion festgestellt wird, ob der Verstärker fehlerfrei arbeitet oder nicht.

Besonders vorteilhaft werden die Testsignale in der Adressiereinheit generiert.

Alternativ werden mit einem Testbus generierte Testsignale in der Adressiereinheit an die Verstärker ausgegeben.

Die Testsignale werden somit extern generiert und in der Adressiereinheit zur Ausgabe an spezifische Verstärker übernommen.

Die Zeitpunkte, zu welchen Verstärker mit Testsignalen getestet werden, werden generell durch die Adressiereinheit vorgegeben.

Beispielsweise erfolgt die Testung des oder eines Verstärkers zu Testzeitpunkten, bei welchen der dem Verstärker zugeordnete Empfänger keine Lichtstrahlen des zugeordneten Senders empfängt.

Dies wird dadurch erreicht, dass die Adressiereinheit einen Testvorgang für einen Verstärker dann initiiert, wenn der dem Verstärker zugeordnete Empfänger keine Lichtstrahlen empfängt, d.h. wenn der zugeordnete Sender nicht aktiviert ist. In diesem Fall darf der Empfänger keine Empfangssignale generieren, was anhand der Testsignale abprüfbar ist.

Besonders vorteilhaft werden mit Testsignalen unterschiedliche Verstärkungseigenschaften von Verstärkern getestet.

In diesem Fall werden z.B. Erwartungshaltungen zur Prüfung der von einem Verstärker rückgelesenen Testsignale durch mehrere Schwellwerte definiert, mit denen die rückgelesenen Testsignale verglichen werden.

Beispielsweise kann für ein kleines Testsignal ein niedriger Schwellwert vorgegeben werden, den das Testsignal im fehlerfreien Fall nicht überschreiten darf.

Weiterhin kann für ein großes, hohes Testsignal ein hoher Schwellwert vorgegeben werden, den das Testsignal überschreiten soll.

Zudem kann das Summensignal eines großen und kleinen Testsignals mit einem vorgegebenen weiteren Schwellwert verglichen werden, den das Summensignal im fehlerfreien Zustand überschreiten muss.

Schließlich kann auch das Zeitverhalten von rückgelesenen Testsignalen geprüft werden, in dem dieses Testsignal zeitlich verzögert mit wenigstens einem Schwellwert bewertet wird.

Generell sind die Testsignale Strom- oder Spannungssignale.

Um eine bessere Resistenz gegen EMV-Störungen zu erhalten, können Differenzsignale dieser Strom- oder Spannungssignale betrachtet werden.

Der Umfang der Testung kann vorteilhaft dahingehend erweitert sein, dass ein in der Steuerung vorhandener zusätzlicher Verstärker mit dem Testvorgang mitgetestet wird.

Gemäß einer ersten Ausgestaltung ist jedem Empfänger ein Verstärker zugeordnet.

Gemäß einer zweiten Ausgestaltung ist nur ein Verstärker vorhanden, der in einem Multiplexbetrieb derart betrieben ist, dass mit diesem zeitlich nacheinander die Empfangssignale der Empfänger verstärkt werden.

Gemäß einer dritten Ausgestaltung sind Gruppen von Empfängern jeweils einem Verstärker zugeordnet. Jeder Verstärker in einem Multiplexbetrieb ist derart betrieben, dass mit diesem zeitlich nacheinander die Empfangssignale der Empfänger der jeweiligen Gruppe verstärkt werden.

Die jeweils einem Verstärker zugeordnete Gruppe von Empfängern kann insbesondere eine Kaskade bilden. Eine Kaskade ist eine separate Hardware-Einheit, beispielsweise dadurch realisiert, dass deren Empfänger auf einer Leiterkarte angeordnet sind.

Generell ist zur Durchführung des oder eines Multiplexbetriebs eine Signalauswahleinheit vorhanden.

Insbesondere ist die Signalauswahleinheit ein Multiplexer.

Besonders vorteilhaft werden mit einer Signalauswahleinheit Testsignale an den zugeordneten Verstärkern ausgegeben.

Die Testsignale können hierzu von der Adressiereinheit der jeweiligen Signalauswahleinheit zur Verfügung gestellt werden.

Gemäß einer vorteilhaften Ausgestaltung ist der Lichtvorhang ein Sicherheitssensor. Der Lichtvorhang weist dann einen fehlersicheren Aufbau auf und kann so in sicherheitstechnischen Applikationen eingesetzt werden. Der fehlersichere Aufbau kann insbesondere durch eine mehrkanalige Auswerteeinheit realisiert werden.

Die Erfindung wird im Folgenden anhand der Zeichnungen erläutert. Es zeigen:
- Figur 1:: Schematische Darstellung eines Ausführungsbeispiels des erfindungsgemäßen Lichtvorhangs.
- Figur 2:: Erstes Beispiel einer empfangsseitigen Schaltungsanordnung für den Lichtvorhang gemäß Figur 1.
- Figur 3:: Zweites Beispiel einer empfangsseitigen Schaltungsanordnung für den Lichtvorhang gemäß Figur 1.
- Figur 4:: Erstes Beispiel einer Schaltungsanordnung zur Ansteuerung mehrerer Gruppen von Empfängern des Lichtvorhangs gemäß Figur 1.
- Figur 5:: Zweites Beispiel einer Schaltungsanordnung zur Ansteuerung mehrerer Gruppen von Empfängern des Lichtvorhangs gemäß Figur 1.
- Figur 6:: Adressiereinheit für die Anordnung gemäß Figur 2.
- Figur 7:: Schaltungsanordnung mit einem Multiplexer für den Lichtvorhang gemäß Figur 1.

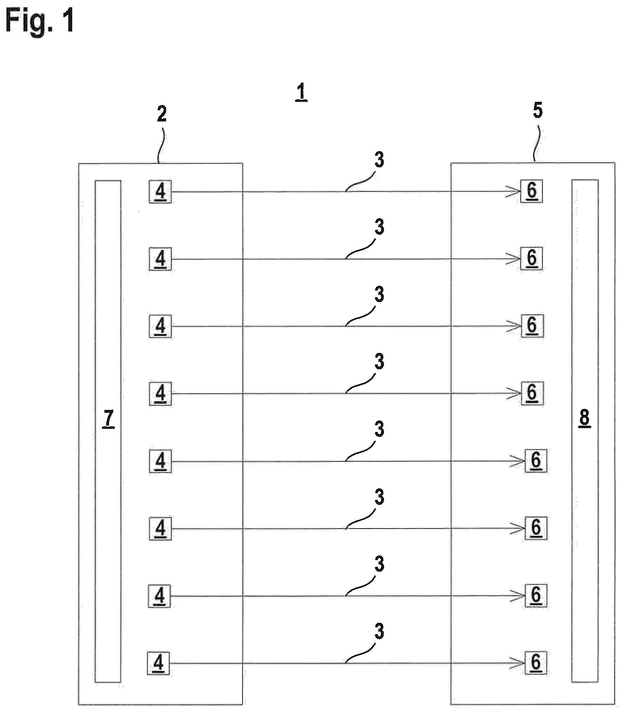

Figur 1 zeigt den prinzipiellen Aufbau des erfindungsgemäßen Lichtvorhangs 1. Der Lichtvorhang 1 umfasst eine Sendereinheit 2, in deren Gehäuse eine Reihenanordnung von Lichtstrahlen 3 emittierenden Sendern 4 in Form von Sendedioden angeordnet ist. Die Sendedioden sind von Leuchtdioden oder dergleichen gebildet. Der Lichtvorhang 1 weist weiterhin eine Empfängereinheit 5 auf, in deren Gehäuse eine Reihenanordnung von Lichtstrahlen 3 empfangenden Empfängern 6 in Form von Empfangsdioden vorgesehen ist. Die Empfangsdioden sind von Foto-PIN-Dioden oder Foto-Dioden gebildet. Alternativ können auch Foto-Transistoren eingesetzt werden.

Die Sendereinheit 2 und die Empfängereinheit 5 sind an gegenüberliegenden Rändern eines Überwachungsbereichs angeordnet. Bei freiem Überwachungsbereich treffen die von jeweils einem Sender 4 emittierten Lichtstrahlen 3 auf einen zugeordneten, gegenüberliegenden Empfänger 6. Ein Sender 4 und der hierzu zugeordnete Empfänger 6 bilden jeweils eine Strahlachse. Der Senderbetrieb wird durch eine Steuereinheit 7 in der Sendereinheit 2 gesteuert und bewertet. Der Empfängerbetrieb wird durch eine Auswerteeinheit 8 in der Empfängereinheit 5 gesteuert. Die Sender 4 und Empfänger 6 der einzelnen Strahlachsen werden durch eine optische Synchronisierung des Lichtvorhangs 1 zyklisch einzeln oder zu mehreren nacheinander aktiviert. Mit den parallel verlaufenden Lichtstrahlen 3 der Strahlachsen wird ein in einer Ebene verlaufendes Schutzfeld überwacht.

In der Auswerteeinheit 8 werden hierzu die Empfangssignale der Empfängerdioden ausgewertet, um als Objektfeststellungssignal ein binäres Schaltsignal zu erzeugen. Der erste Schaltzustand entspricht einer Objektmeldung, der zweite Schaltzustand einem freien Schutzfeld.

Der Lichtvorhang 1 bildet einen Sicherheitssensor für den Einsatz im Bereich der Sicherheitstechnik. Hierzu weist der Lichtvorhang 1 einen fehlersicheren Aufbau auf. Insbesondere weist die Auswerteeinheit 8 einen mehrkanaligen, redundanten Aufbau auf, beispielsweise in Form zweier sich zyklisch überwachender Rechnereinheiten.

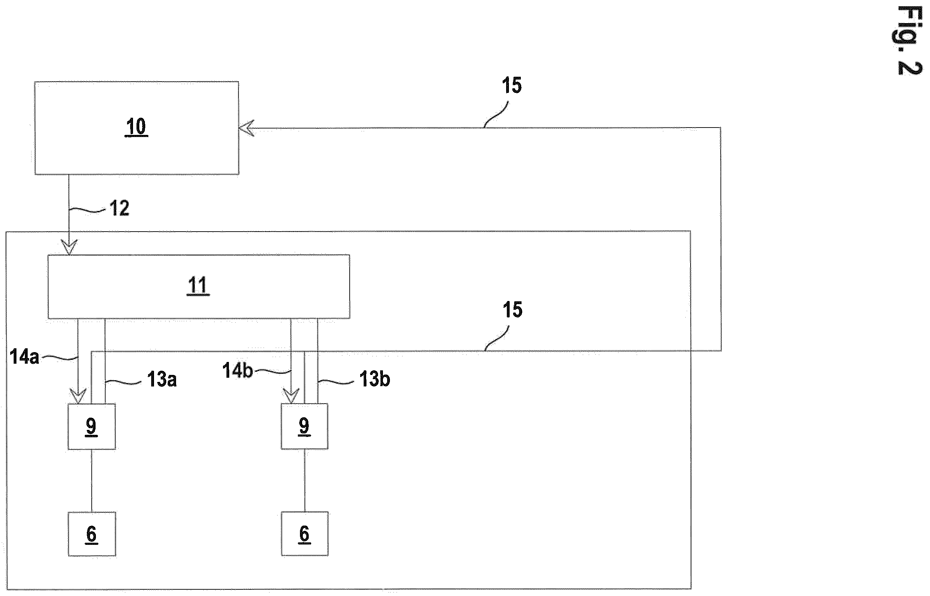

Figur 2 zeigt eine empfangsseitige Schaltungsanordnung für den Lichtvorhang 1 gemäß Figur 1.

Der Übersichtlichkeit halber sind nur zwei der Empfänger 6 des Lichtvorhangs 1 in Figur 2 dargestellt. Im vorliegenden Fall ist jedem Empfänger 6 ein Verstärker 9 zugeordnet, in dem die Empfangssignale des jeweiligen Empfängers 6 verstärkt werden.

Die Schaltungsanordnung weist eine Steuerung 10 auf, die im vorliegenden Fall Bestandteil der Auswerteeinheit 8 ist. Die Steuerung 10 steuert eine Adressiereinheit 11 durch Ausgabe von Steuersignalen 12. Durch die Adressierung werden die Empfänger 6 zeitlich nacheinander aktiviert.

Hierzu gibt die Steuerung 10 Signale 13a, 13b an die Verstärker 9 und deren zugeordnete Empfänger 6 aus.

Erfindungsgemäß weist der Lichtvorhang 1 eine Testeinrichtung zur Testung der Verstärker 9 auf.

Im vorliegenden Fall ist die Adressiereinheit Bestandteil der Testeinrichtung. Die Adressiereinheit gibt Testsignale 14a, 14b an die Verstärker 9 aus.

Die Testsignale 14a, 14b werden über einen Signalbus 15 an die Steuerung 10 rückgelesen, wodurch die Steuerung 10 prüfen kann, ob die Verstärker 9 fehlerfrei arbeiten.

Die Adressiereinheit 11 verfügt über eine zusätzliche, d.h. gesonderte Adresse, mittels derer gezielt Testvorgänge in einzelnen Verstärkern 9 ausgelöst werden. Ohne eine solche zusätzliche Adresse würden alle Verstärker 9 gleichzeitig getestet.

Die Testsignale 14a, 14b werden im vorliegenden Fall direkt in der Adressiereinheit 11 generiert.

Alternativ können mit einem Testbus generierte Testsignale 14a, 14b in der Adressiereinheit 11 an die Verstärker 9 ausgegeben werden.

Zur Durchführung der Tests der Verstärker 9 werden generell Testsignale 14a, 14b von den Verstärkern 9 in die Steuerung 10 rückgelesen und dort mit vorgegebenen Erwartungshaltungen verglichen.

Insbesondere sind die Erwartungshaltungen von Sollwerten gebildet.

Insbesondere werden mit Testsignalen 14a, 14b unterschiedliche Verstärkungseigenschaften von Verstärkern 9 getestet.

Vorteilhaft wird in der Testeinrichtung bei Aufdeckung eines Fehlers eines Verstärkers 9 eine Fehlermeldung generiert oder der Lichtvorhang 1 wird stillgesetzt.

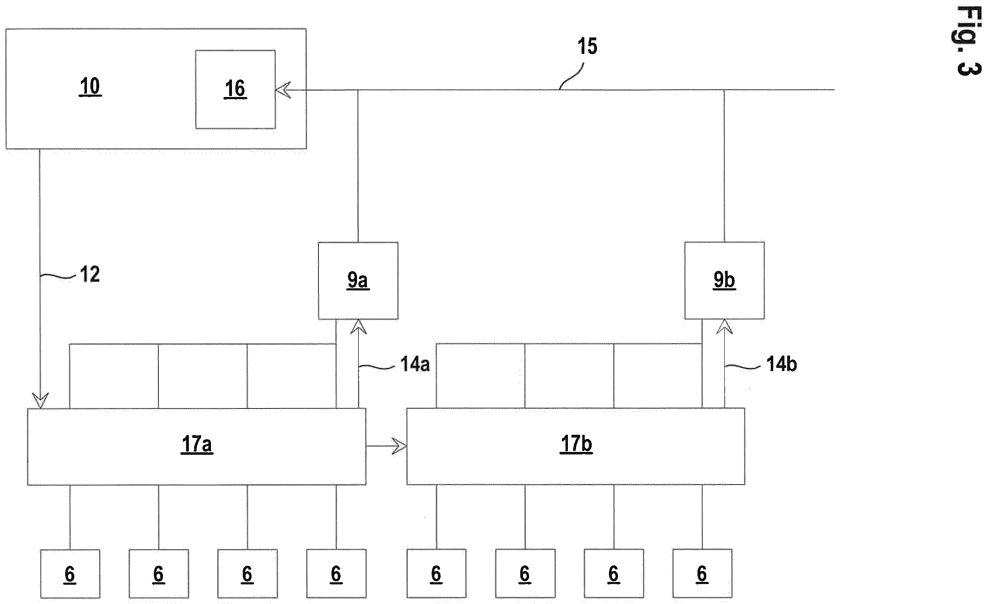

Figur 3 zeigt ein weiteres Ausführungsbeispiel der empfangsseitigen Schaltungsanordnung für den Lichtvorhang 1 gemäß Figur 1.

In diesem Fall sind zwei Gruppen von je vier Empfängern 6 vorhanden, welchen jeweils ein Verstärker 9a, 9b zugeordnet ist. Natürlich kann auch eine andere Anzahl von Gruppen mit jeweils einer anderen Anzahl von Empfängern 6 vorgesehen sein. Die Gruppen der Empfänger 6 können als Kaskaden, d.h. eigenständige Hardware-Einheiten ausgebildet sein.

Die Empfänger 6 und Verstärker 9a, 9b werden wieder über eine Adressiereinheit 11 adressiert, wobei diese im vorliegenden Fall in der Steuerung 10 integriert ist. Zudem ist in der Steuerung 10 ein zusätzlicher Verstärker 16 vorhanden.

Die Empfänger 6 jeder Gruppe werden mittels einer Signalauswahleinheit in Form eines Multiplexers 17a, 17b in einem Multiplexbetrieb derart betrieben, dass diese zeitlich und einzeln nacheinander dem jeweiligen Verstärker 9a, 9b zugeschaltet werden, so dass dort die Empfangssignale des jeweiligen Verstärkers 9a, 9b verstärkt werden.

Testsignale 14a, 14b, die in der Steuerung 10 bzw. der Adressiereinheit 11 generiert werden, werden über die Multiplexer 17a, 17b an die Verstärker 9a, 9b ausgegeben. Die Testsignale 14a, 14b werden dann über den Signalbus 15 in die Steuerung 10 rückgelesen.

Die Testung der Verstärker 9a, 9b erfolgt im Weiteren analog zur Ausführungsform gemäß Figur 2.

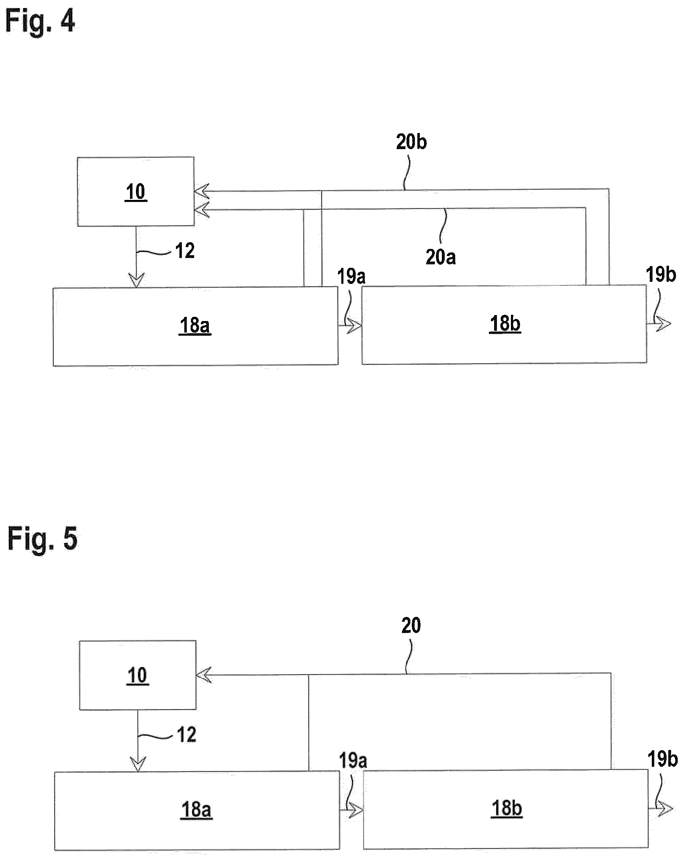

Figur 4 zeigt schematisch eine Ansteuerung von Empfänger-Gruppen 18a, 18b mit jeweils mehreren Empfängern 6 und einem Verstärker 9, die von der Steuerung 10 gesteuert werden. Die Empfänger-Gruppen 18a, 18b können über verkettete Signale 19a, 19b oder mehrere Busleitungen 20a, 20b verbunden sein.

Figur 5 zeigt eine der Figur 4 weitgehend entsprechende Anordnung, wobei in diesem Fall nur eine Busleitung 20 vorhanden ist.

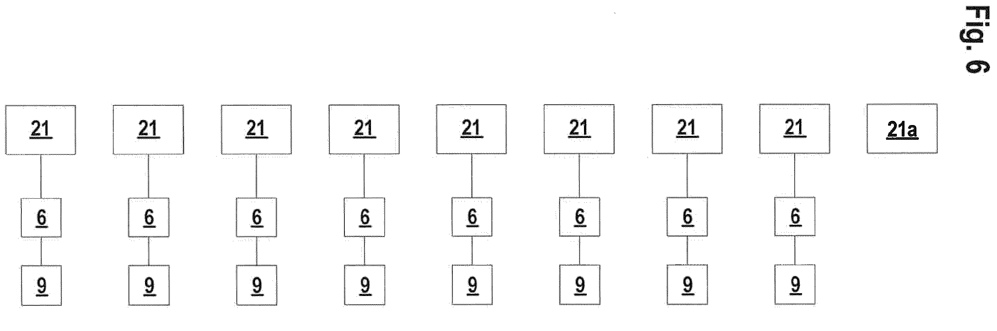

Die Adressiereinheit 11 des Lichtvorhangs 1 ist vorteilhaft in Form einer Schiebekette ausgebildet. Ein Ausführungsbeispiel hierfür zeigt Figur 6. Figur 6 zeigt dabei eine Adressiereinheit 11 für die Anordnung gemäß Figur 2. Eine derartige Schiebekette besteht aus einer Reihenanordnung von Schieberegisterelementen 21, die vorteilhaft aus Flip-Flops aufgebaut sind. Dabei sind jedem Empfänger 6 und Verstärker 9 jeweils ein Schieberegisterelement 21 zugeordnet. Die Schieberegisterelemente 21 adressieren die einzelnen Empfänger 6 und Verstärker 9. Weiterhin ist ein gesondertes Schieberegisterelement 21a in der Schiebekette vorhanden, mittels dessen Testsignale 14a, 14b für einen der Verstärker 9 generiert werden.

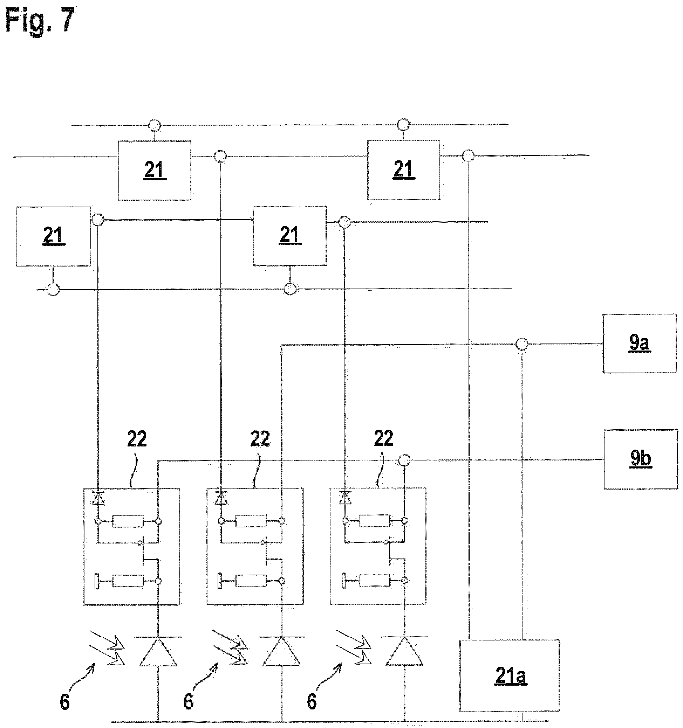

Figur 7 zeigt eine empfangsseitige Schaltungsanordnung mit Analogschaltern 22 als Multiplexern 17a, 17b zum Schalten auf Verstärker 9a, 9b, die Gruppen von Empfängern 6 zugeordnet sind, damit diese im Multiplexbetrieb betrieben werden (entsprechend der Ausführungsform gemäß Figur 3).

Die Adressierung der Empfänger 6 und Verstärker 9a, 9b erfolgt über Schieberegisterelemente 21, einer Schiebekette, die die Adressiereinheit 11 bildet. Ein weiteres Schieberegisterelement 21a dient zur Generierung von Testsignalen 14a, 14b zum Testen der Verstärker 9a, 9b.

### Bezugszeichenliste

- (1): Lichtvorhang
- (2): Sendereinheit
- (3): Lichtstrahl
- (4): Sender
- (5): Empfängereinheit
- (6): Empfänger
- (7): Steuereinheit
- (8): Auswerteeinheit
- (9): Verstärker
- (9a): Verstärker
- (9b): Verstärker
- (10): Steuerung
- (11): Adressiereinheit
- (12): Steuersignal
- (13a): Signal
- (13b): Signal
- (14a): Testsignal
- (14b): Testsignal
- (15): Signalbus
- (16): Verstärker
- (17a): Multiplexer
- (17b): Multiplexer
- (18a): Empfänger-Gruppe
- (18b): Empfänger-Gruppe
- (19a): Signal
- (19b): Signal
- (20): Busleitung
- (20a): Busleitung
- (20b): Busleitung
- (21): Schieberegisterelement
- (21a): Schieberegisterelement
- (22): Analogschalter

## Patentansprüche

1. Lichtvorhang (1) zur Erfassung von Objekten in einem Überwachungsbereich, mit einer Anordnung von Lichtstrahlen (3) emittierenden Sendern (4), mit einer Anordnung von Lichtstrahlen (3) empfangenden Empfängern (6), und mit einer Anordnung von Verstärkern (9, 9a), in welchen Empfangssignale der Empfänger (6) verstärkt werden, und mit einer Auswerteeinheit (8), in welcher in Abhängigkeit der verstärkten Empfangssignale ein Objektfeststellungssignal in Form eines binären Schaltsignals, dessen Schaltzustände angeben, ob ein Objekt im Überwachungsbereich vorhanden ist oder nicht, generiert wird, wobei eine Testeinrichtung vorhanden ist, mittels derer Verstärkungseigenschaften der Verstärker (9, 9a) getestet werden, **dadurch gekennzeichnet, dass** eine Adressiereinheit (11) vorhanden ist, mittels derer eine Adressierung der Empfänger (6) und Verstärker (9, 9a) durchgeführt wird, und dass mit der Adressiereinheit (11) Testvorgänge ausgelöst werden.

2. Lichtvorhang (1) nach Anspruch 1, **dadurch gekennzeichnet, dass** mit der Adressiereinheit (11) Testvorgänge dadurch ausgelöst werden, dass Testsignale (14a, 14b) an die Verstärker (9, 9a) ausgegeben werden.

3. Lichtvorhang (1) nach Anspruch 2, **dadurch gekennzeichnet, dass** die Testsignale (14a, 14b) in der Adressiereinheit (11) generiert werden.

4. Lichtvorhang (1) nach Anspruch 2, **dadurch gekennzeichnet, dass** mit einem Testbus generierte Testsignale (14a, 14b) vom der Adressiereinheit (11) an die Verstärker (9, 9a) ausgegeben werden.

5. Lichtvorhang (1) nach einem der Ansprüche 1 bis 4, **dadurch gekennzeichnet, dass** die Adressiereinheit (11) mindestens eine gesonderte Adresse zur Auslösung von Testvorgängen aufweist.

6. Lichtvorhang (1) nach einem der Ansprüche 1 bis 5, **dadurch gekennzeichnet, dass** der Adressiereinheit (11) eine Steuerung (9) zugeordnet ist, in welcher Testvorgänge überprüft werden.

7. Lichtvorhang (1) nach Anspruch 6, **dadurch gekennzeichnet, dass** die Adressiereinheit (11) eine Schiebekette, bestehend aus einer Anordnung von Schieberegisterelementen (21, 21a), aufweist.

8. Lichtvorhang (1) nach einem der Ansprüche 6 oder 7, **dadurch gekennzeichnet, dass** Testsignale (14a, 14b) von den Verstärkern (9, 9a) in die Steuerung (9) rückgelesen werden und dort mit vorgegebenen Erwartungshaltungen verglichen sind.

9. Lichtvorhang (1) nach Anspruch 8, **dadurch gekennzeichnet, dass** die Erwartungshaltungen von Sollwerten gebildet sind.

10. Lichtvorhang (1) nach einem der Ansprüche 1 bis 9, **dadurch gekennzeichnet, dass** die Testung des oder eines Verstärkers (9, 9a) zu Testzeitpunkten erfolgt, bei welchen der dem Verstärker (9, 9a) zugeordnete Empfänger (6) keine Lichtstrahlen (3) des zugeordneten Senders (4) empfängt.

11. Lichtvorhang (1) nach einem der Ansprüche 2 bis 10, **dadurch gekennzeichnet, dass** mit Testsignalen (14a, 14b) unterschiedliche Verstärkungseigenschaften von Verstärkern (9, 9a) getestet werden.

12. Lichtvorhang (1) nach einem der Ansprüche 2 bis 10, **dadurch gekennzeichnet, dass** die Testsignale (14a, 14b) Strom- oder Spannungssignale sind.

13. Lichtvorhang (1) nach einem der Ansprüche 6 bis 9, **dadurch gekennzeichnet, dass** ein in der Steuerung (9) vorhandener zusätzlicher Verstärker (16) mit den Testvorgängen mitgetestet wird.

14. Lichtvorhang (1) nach einem der Ansprüche 1 bis 13, **dadurch gekennzeichnet, dass** in der Testeinrichtung bei Aufdeckung eines Fehlers eines Verstärkers (9, 9a, 9b, 16) eine Fehlermeldung generiert wird oder der Lichtvorhang (1) stillgesetzt wird.

15. Lichtvorhang (1) nach einem der Ansprüche 1 bis 14, **dadurch gekennzeichnet, dass** jedem Empfänger (6) ein Verstärker (9, 9a) zugeordnet ist.

16. Lichtvorhang (1) nach einem der Ansprüche 1 bis 14, **dadurch gekennzeichnet, dass** nur ein Verstärker (9, 9a) vorhanden ist, der in einem Multiplexbetrieb derart betrieben ist, dass mit diesem zeitlich nacheinander die Empfangssignale der Empfänger (6) verstärkt werden.

17. Lichtvorhang (1) nach einem der Ansprüche 1 bis 14, **dadurch gekennzeichnet, dass** Gruppen von Empfängern (6) jeweils einem Verstärker (9, 9a) zugeordnet sind, wobei jeder Verstärker (9, 9a) in einem Multiplexbetrieb derart betrieben ist, dass mit diesem zeitlich nacheinander die Empfangssignale der Empfänger (6) der jeweiligen Gruppe verstärkt werden.

18. Lichtvorhang (1) nach einem der Ansprüche 16 oder 17, **dadurch gekennzeichnet, dass** zur Durchführung des oder eines Multiplexbetriebs eine Signalauswahleinheit vorhanden ist.

19. Lichtvorhang (1) nach Anspruch 18, **dadurch gekennzeichnet, dass** die Signalauswahleinheit ein Multiplexer (17a, 17b) ist.

20. Lichtvorhang (1) nach einem der Ansprüche 17 oder 19, **dadurch gekennzeichnet, dass** mit einer Signalauswahleinheit Testsignale (14a, 14b) an den zugeordneten Verstärkern (9, 9a) ausgegeben werden.

21. Lichtvorhang (1) nach einem der Ansprüche 1 bis 20, **dadurch gekennzeichnet, dass** dieser ein Sicherheitssensor ist.

22. Verfahren zur Erfassung von Objekten in einem Überwachungsbereich mittels eines Lichtvorhangs (1) mit einer Anordnung von Lichtstrahlen (3) emittierenden Sendern (4), mit einer Anordnung von Lichtstrahlen (3) empfangenden Empfängern (6), und mit einer Anordnung von Verstärkern (9, 9a), in welchen Empfangssignale der Empfänger (6) verstärkt werden, und mit einer Auswerteeinheit (8), in welcher in Abhängigkeit der verstärkten Empfangssignale ein Objektfeststellungssignal in Form eines binären Schaltsignals, dessen Schaltzustände angeben, ob ein Objekt im Überwachungsbereich vorhanden ist oder nicht, generiert wird, wobei eine Testeinrichtung vorhanden ist, mittels derer Verstärkungseigenschaften der Verstärker (9, 9a) getestet werden, **dadurch gekennzeichnet, dass** eine Adressiereinheit (11) vorhanden ist, mittels derer eine Adressierung der Empfänger (6) und Verstärker (9, 9a) durchgeführt wird, und dass mit der Adressiereinheit (11) Testvorgänge ausgelöst werden.

## Claims

1. Light curtain (1) for detecting objects in a surveillance area, with an arrangement of transmitters (4) emitting light beams (3), with an arrangement of receivers (6) receiving light beams (3), and with an arrangement of amplifiers (9, 9a) in which received signals of the receivers (6) are amplified, and with an evaluation unit (8) in which, as a function of the amplified received signals, an object detection signal is generated in the form of a binary switching signal, the switching states of which indicate whether an object is present in the surveillance area or not, a test device being present by means of which amplifier properties of the amplifiers (9, 9a) are determined, whose switching states indicate whether or not an object is present in the monitoring area, wherein a test device is provided, by means of which amplification properties of the amplifiers (9, 9a) are tested, **characterised in that** an addressing unit (11) is provided, by means of which addressing of the receivers (6) and amplifiers (9, 9a) is carried out, and **in that** test operations are triggered with the addressing unit (11).

2. Light curtain (1) according to claim 1, **characterised in that** the addressing unit (11) is used to trigger test processes by outputting test signals (14a, 14b) to the amplifiers (9, 9a).

3. Light curtain (1) according to claim 2, **characterised in that** the test signals (14a, 14b) are generated in the addressing unit (11).

4. Light curtain (1) according to claim 2, **characterised in that** test signals (14a, 14b) generated with a test bus are output from the addressing unit (11) to the amplifiers (9, 9a).

5. Light curtain (1) according to one of claims 1 to 4, **characterised in that** the addressing unit (11) has at least one separate address for triggering test processes.

6. Light curtain (1) according to one of claims 1 to 5, **characterised in that** the addressing unit (11) is assigned a controller (9) in which test processes are checked.

7. Light curtain (1) according to claim 6, **characterised in that** the addressing unit (11) has a shift chain consisting of an arrangement of shift register elements (21, 21a).

8. Light curtain (1) according to one of claims 6 or 7, **characterised in that** test signals (14a, 14b) are read back from the amplifiers (9, 9a) into the controller (9) and are compared there with predetermined expectations.

9. Light curtain (1) according to claim 8, **characterised in that** the expected positions are formed by setpoint values.

10. Light curtain (1) according to one of claims 1 to 9, **characterised in that** the testing of the or an amplifier (9, 9a) takes place at test times at which the receiver (6) assigned to the amplifier (9, 9a) does not receive any light beams (3) from the assigned transmitter (4).

11. Light curtain (1) according to one of claims 2 to 10, **characterised in that** different amplification properties of amplifiers (9, 9a) are tested with test signals (14a, 14b).

12. Light curtain (1) according to one of claims 2 to 10, **characterised in that** the test signals (14a, 14b) are current or voltage signals.

13. Light curtain (1) according to one of claims 6 to 9, **characterised in that** an additional amplifier (16) present in the controller (9) is also tested with the test processes.

14. Light curtain (1) according to one of claims 1 to 13, **characterised in that** an error message is generated in the test device when a fault of an amplifier (9, 9a, 9b, 16) is detected or the light curtain (1) is stopped.

15. Light curtain (1) according to one of claims 1 to 14, **characterised in that** an amplifier (9, 9a) is assigned to each receiver (6).

16. Light curtain (1) according to one of claims 1 to 14, **characterised in that** only one amplifier (9, 9a) is present, which is operated in a multiplex mode in such a way that the received signals of the receivers (6) are amplified with it in succession.

17. Light curtain (1) according to one of claims 1 to 14, **characterised in that** groups of receivers (6) are each assigned to one amplifier (9, 9a), wherein each amplifier (9, 9a) is operated in a multiplex mode in such a way that the received signals of the receivers (6) of the respective group are amplified with it in succession in time.

18. Light curtain (1) according to one of claims 16 or 17, **characterised in that** a signal selection unit is provided for carrying out the or a multiplex operation.

19. Light curtain (1) according to claim 18, **characterised in that** the signal selection unit is a multiplexer (17a, 17b).

20. Light curtain (1) according to one of claims 17 or 19, **characterised in that** test signals (14a, 14b) are output to the associated amplifiers (9, 9a) with a signal selection unit.

21. Light curtain (1) according to one of claims 1 to 20, **characterised in that** this is a safety sensor.

22. Method for detecting objects in a monitoring area by means of a light curtain (1) with an arrangement of transmitters (4) emitting light beams (3), with an arrangement of receivers (6) receiving light beams (3), and with an arrangement of amplifiers (9, 9a) in which received signals of the receivers (6) are amplified, and with an evaluation unit (8) in which, depending on the amplified received signals, an object detection signal is output in the form of a binary switching signal, whose switching states indicate whether or not an object is present in the monitoring area, wherein a test device is provided by means of which amplification properties of the amplifiers (9, 9a) are tested, **characterised in that** an addressing unit (11) is provided by means of which addressing of the receivers (6) and amplifiers (9, 9a) is carried out, and **in that** test operations are triggered with the addressing unit (11).

## Revendications

1. Rideau lumineux (1) pour la détection d'objets dans une zone de surveillance, comportant un ensemble d'émetteurs (4) émettant des faisceaux lumineux (3), comportant un ensemble de récepteurs (6) recevant des faisceaux lumineux (3), et comportant un ensemble d'amplificateurs (9, 9a) dans lesquels les signaux reçus des récepteurs (6) sont amplifiés, et comportant une unité d'évaluation (8) dans laquelle, en fonction des signaux reçus amplifiés, un signal de détection d'objet est généré sous la forme d'un signal de commutation binaire, dont les états de commutation indiquent si un objet est présent dans la zone de surveillance ou non, un dispositif de test est présent, au moyen duquel sont déterminées les propriétés d'amplification des amplificateurs (9, 9a), dont les états de commutation indiquent si un objet est présent ou non dans la zone de surveillance, **caractérisé en ce qu'**une unité d'adressage (11) est présente, au moyen de laquelle l'adressage des récepteurs (6) et des amplificateurs (9, 9a) est effectué, et **en ce que** des opérations de test sont déclenchées avec l'unité d'adressage (11).

2. Rideau lumineux (1) selon la revendication 1, **caractérisé par le fait que** l'unité d'adressage (11) est utilisée pour déclencher des processus de test en émettant des signaux de test (14a, 14b) vers les amplificateurs (9, 9a).

3. Rideau lumineux (1) selon la revendication 2, **caractérisé par le fait que** les signaux de test (14a, 14b) sont générés dans l'unité d'adressage (11).

4. Rideau lumineux (1) selon la revendication 2, **caractérisé par le fait que** les signaux de test (14a, 14b) générés avec un bus de test sont émis par l'unité d'adressage (11) vers les amplificateurs (9, 9a).

5. Rideau lumineux (1) selon l'une des revendications 1 à 4, **caractérisé par le fait que** l'unité d'adressage (11) possède au moins une adresse séparée pour le déclenchement des processus de test.

6. Rideau lumineux (1) selon l'une des revendications 1 à 5, **caractérisé par le fait que** l'unité d'adressage (11) est associée à un dispositif de commande (9) dans lequel les processus d'essai sont vérifiés.

7. Rideau lumineux (1) selon la revendication 6, **caractérisé par le fait que** l'unité d'adressage (11) possède une chaîne de décalage constituée d'un arrangement d'éléments de registre de décalage (21, 21a).

8. Rideau lumineux (1) selon l'une des revendications 6 ou 7, **caractérisé par le fait que** les signaux de test (14a, 14b) sont lus à partir des amplificateurs (9, 9a) dans le dispositif de commande (9) et y sont comparés à des attentes prédéterminées.

9. Rideau lumineux (1) selon la revendication 8, **caractérisé par le fait que** les positions attendues sont formées par des valeurs de consigne.

10. Rideau lumineux (1) selon l'une des revendications 1 à 9, **caractérisé par le fait que** le test du ou d'un amplificateur (9, 9a) a lieu à des moments de test où le récepteur (6) affecté à l'amplificateur (9, 9a) ne reçoit pas de faisceaux lumineux (3) de l'émetteur (4) qui lui est affecté.

11. Rideau lumineux (1) selon l'une des revendications 2 à 10, **caractérisé par le fait que** différentes propriétés d'amplification des amplificateurs (9, 9a) sont testées avec des signaux d'essai (14a, 14b).

12. Rideau lumineux (1) selon l'une des revendications 2 à 10, **caractérisé par le fait que** les signaux d'essai (14a, 14b) sont des signaux de courant ou de tension.

13. Rideau lumineux (1) selon l'une des revendications 6 à 9, **caractérisé par le fait qu'**un amplificateur supplémentaire (16) présent dans le dispositif de commande (9) est également testé avec les processus d'essai.

14. Rideau lumineux (1) selon l'une des revendications 1 à 13, **caractérisé par le fait qu'**un message d'erreur est généré dans le dispositif de test lorsqu'un défaut d'un amplificateur (9, 9a, 9b, 16) est détecté ou que le rideau lumineux (1) est arrêté.

15. Rideau lumineux (1) selon l'une des revendications 1 à 14, **caractérisé par le fait qu'**un amplificateur (9, 9a) est affecté à chaque récepteur (6).

16. Rideau lumineux (1) selon l'une des revendications 1 à 14, **caractérisé par** la présence d'un seul amplificateur (9, 9a), qui fonctionne en mode multiplex de telle sorte que les signaux reçus des récepteurs (6) sont amplifiés successivement par cet amplificateur.

17. Rideau lumineux (1) selon l'une des revendications 1 à 14, **caractérisée par le fait que** des groupes de récepteurs (6) sont affectés chacun à un amplificateur (9, 9a), dans lequel chaque amplificateur (9, 9a) est exploité en mode multiplex de telle sorte que les signaux reçus des récepteurs (6) du groupe respectif sont amplifiés avec lui successivement dans le temps.

18. Rideau lumineux (1) selon l'une des revendications 16 ou 17, **caractérisé par le fait qu'**une unité de sélection des signaux est prévue pour effectuer l'opération de multiplexage.

19. Rideau lumineux (1) selon la revendication 18, **caractérisé en ce que** l'unité de sélection des signaux est un multiplexeur (17a, 17b).

20. Rideau lumineux (1) selon l'une des revendications 17 ou 19, **caractérisé par le fait que** les signaux de test (14a, 14b) sont délivrés aux amplificateurs associés (9, 9a) avec une unité de sélection des signaux.

21. Rideau lumineux (1) selon l'une des revendications 1 à 20, **caractérisé par le fait qu'**il s'agit d'un capteur de sécurité.

22. Procédé de détection d'objets dans une zone de surveillance au moyen d'un rideau lumineux (1) comportant un ensemble d'émetteurs (4) émettant des faisceaux lumineux (3), un ensemble de récepteurs (6) recevant des faisceaux lumineux (3), un ensemble d'amplificateurs (9, 9a) amplifiant les signaux reçus des récepteurs (6) et une unité d'évaluation (8) émettant un signal de détection d'objet sous la forme d'un signal de commutation binaire, en fonction des signaux reçus amplifiés, dont les états de commutation indiquent si un objet est présent ou non dans la zone de surveillance, dans lequel un dispositif de test est prévu pour tester les propriétés d'amplification des amplificateurs (9, 9a), **caractérisé par** la présence d'une unité d'adressage (11) permettant d'adresser les récepteurs (6) et les amplificateurs (9, 9a) et de déclencher des opérations de test à l'aide de l'unité d'adressage (11).
